# EUROPEAN PATENT SPECIFICATION

(11) **EP 2 721 709 B1**
(45) Date of publication and mention of the grant of the patent: **12.04.2017**
(21) Application number: 12743952.9
(22) Date of filing: 31.07.2012
(51) Int. Cl.: H02J 3/32, H02J 7/00

(54) **DEVICE FOR AN OPTIMIZED OPERATION OF A LOCAL STORAGE SYSTEM IN AN ELECTRICAL ENERGY SUPPLY GRID WITH DISTRIBUTED GENERATORS, DISTRIBUTED STORAGE SYSTEMS AND LOADS**
VORRICHTUNG FÜR OPTIMIERTEM BETRIEB EINES LOKALEN SPEICHERSYSTEMS IN EINEM STROMVERSORGUNGSNETZ MIT VERTEILTEN GENERATOREN, VERTEILTEN SPEICHERSYSTEMEN UND LASTEN
DISPOSITIF DESTINÉ À UN FONCTIONNEMENT OPTIMISÉ D'UN SYSTÈME DE STOCKAGE LOCAL DANS UN RÉSEAU D'ALIMENTATION EN ÉNERGIE ÉLECTRIQUE DOTÉ DE GÉNÉRATEURS DISTRIBUÉS, SYSTÈMES DE STOCKAGE DISTRIBUÉS ET CHARGES

(43) Date of publication of application: 23.04.2014
(73) Proprietor: Caterva GmbH, 82049 Pullach (DE)
(72) Inventor: EGER, Kolja, 85521 Ottobrunn (DE); GERSCH, Roland, 80686 München (DE); HEUER, Jörg, 82041 Oberhaching (DE); WINTER, Martin, 83024 Rosenheim (DE)
(74) Representative: Isarpatent
(86) International application number: PCT/EP2012/064927
(87) International publication number: WO 2014/019607

(56) References cited:
- EP-A1- 2 458 704
- US-A1- 2005 017 687
- US-A1- 2012 189 878

## Description

The invention relates to a device for an optimized operation of a local storage system, e.g. a charge storage in the form of an accumulator but also a thermal storage or a gas storage, in an electrical supply grid connecting distributed generators, for example photovoltaic systems, and distributed loads.

The importance of renewable energy sources is increasing, wherein these energy sources are distributed and are difficult to predict in terms of the amount of energy they can deliver because, by way of example in photovoltaic systems, there is a dependency on the weather. This leads to stability and capacity problems in corresponding electrical power supply grid.

One solution to these problems lies in distributed energy or charge storage devices. Such storage devices are relatively expensive, however, and must be deployed effectively, for example by serving multiple applications from one storage device.

The underlying **object** of the invention now consists of specifying a device for an optimized operation of a local storage system in an electrical energy supply grid with distributed generators, distributed storage systems and loads such that, taking into account the locally restricted availability of energy and power and the boundary conditions resulting from serving multiple applications from one storage system, such as ensuring the power availability, a cost function for the local storage, e. g. the lifetime of the local storage system within an energy supply grid, is optimized.

This object is achieved in accordance with the invention by the features of claim 1. The further claims relate to preferred embodiments of the invention.

Document EP2458704 discloses a device according to the preamble of claim 1.

The invention will be explained below on the basis of exemplary embodiments presented in the drawing, in which
- **Figure 1**: shows an overview diagram to explain the environment of the inventive device,
- **Figure 2**: shows a basic diagram to explain the inventive device,
- **Figure 3**: shows a diagram illustrating the functioning of the inventive device and
- **Figure 4**: shows a further diagram to explain the functioning of the inventive device.

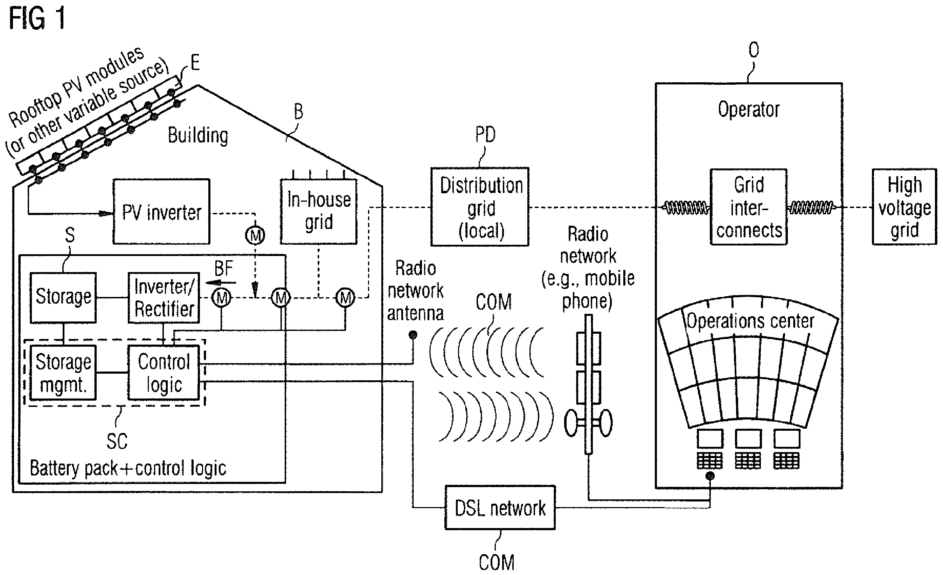

**Figure 1** shows an overview diagram to explain the background of the inventive device with a building B, on the roof of which a local generator E is present in the form of photovoltaic cells and in which, as well as ancillary units such as inverters/rectifiers and measurement devices M, a local storage system S with a charge/discharge current BF, for example an accumulator, and a storage control unit SC are located. This building B is connected for power distribution via a local power distribution grid PD to further buildings, storage systems, power generators and loads and is also connected to an operations center 0 for communication, for example via DSL or mobile radio. Apart from a plain storage device the local storage system S also includes at least units like power electronics, control unit and battery management system.

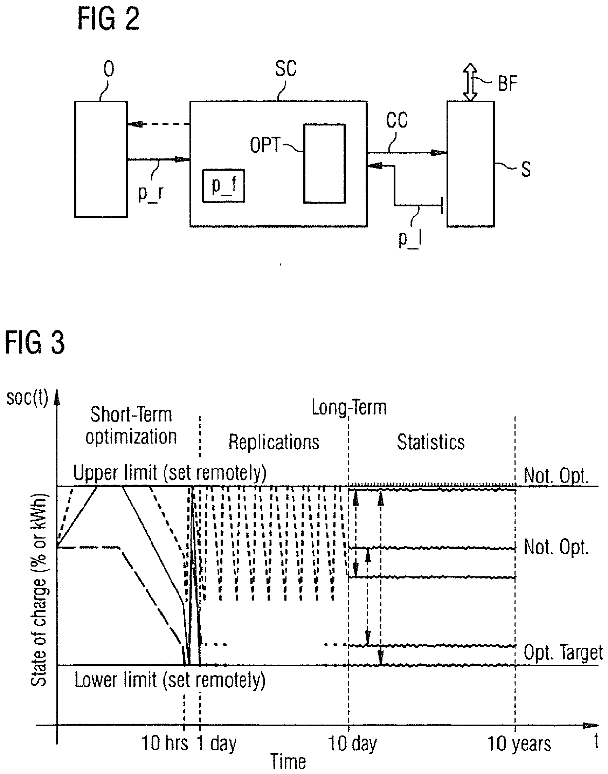

**Figure 2** shows a basic diagram to explain the inventive device in the form of a local storage control unit SC being connected to a corresponding local storage system S and to the operation center O. The control unit SC is calculating a setpoint CCT of the charging/discharging current BF for the storage system S, comprises a local optimizer OPT and is connected in such a way that local values p_l are measurable at the location of the storage system S and transmittable to the operator side 0, locally stored internal installation-dependent control limits p_f are transmittable to the operator side 0 and operational control parameters and/or control limits p_r are receivable from the operator side O.

The control unit SC is advantageously formed such that the charge/discharge current BF of the local storage S shown in **Fig. 1** is optimally adjustable at a given point in time by a search of a minimum of a cost function on the basis of the local values p_l, the locally stored internal installation-dependent control limits p_f and the operational control parameters and/or control limits p_r.

In a preferable embodiment the cost function, which is to be minimized, corresponds to a service life, which is to be maximized, of the local storage system S and this service life is determinable at least from the usage history h([0,t]) of the storage system and a usage history/storage system service life model for the storage system.

The remaining storage capacity cap_h(t) is determinable from the respective usage history h([0,t] and a usage history/storage capacity model for the local storage system S. In this case the service life of the local storage system S is attainable if at least the remaining storage capacity cap_h(t) does not fall below a certain critical storage capacity.

The usage history h([0,t]) advantageously comprises accumulated previous charging profiles c(t, (soc_i, soc_f, CC)), wherein these include the number of charging and/or discharging processes of the storage system that have occurred from a specific initial charging state soc_i to a specific end charging state soc_f and with a specific charging current CC after a specific operating period t.

Optionally the remaining storage capacity cap(t) is formable in that a percentage, which is calculated by weighted integration of the accumulated previous charging profiles c(t, (soc_i, soc_f, CC)) over the range of all possible triples comprising initial charging states, end charging states and charging/discharging currents, is subtracted from 100%, wherein the weighting function w also depends on the triples (soc_i, soc_f, CC) and on the storage model.

Optionally an increase in internal resistance r_h(t) is determinable from the usage history h([0,t]) and a usage history/increase in internal resistance model for the storage system S and the service life of the local storage system S is exceeded at least when the local storage system can no longer absorb and/or deliver a specific critical wattage due to the increase in internal resistance.

The operational control parameters and/or control limits p_r, which are to be conveyed using communications technology, for the local storage system S include advantageously at least information about a maximum charging/discharging current limit and/or information about minimum and maximum charging states for local operation and/or maximum charging/discharging current limits for local operation and/or a default value for a charging/discharging current and/or information about electrical grid service requirements.

The measured values p_l(t) locally determined at the local storage system S include advantageously at least one measured time serie or value for voltage frequency and/or voltage and/or spectra of the voltage and therewith the voltage frequency and/or locally generated current and/or locally consumed current and/or local charge state and/or local charging/discharging current and/or electrical grid voltage and/or temperature at at least one location.

The locally stored internal installation-dependent control limits p_f(t) include advantageously at least one maximum charging/discharging current and/or maximum and minimum charging states.

Optionally an optimal charging/discharging current cc(t) can be approximated by a combination of a detailed short-term consideration within a first time interval [t, t+Delta], e.g. by using a simulation, and a long-term consideration within a following second time interval ]t+Delta,L], e.g. by using a repetition of past statistics.

The short-term consideration optionally comprises a short-term prediction of expected operational control parameters and/or control limits p_r([t,t+Delta]) and a variation of the possible charging/discharging current progressions cc([t,t+Delta]) under the condition of the predicted operational control parameters and/or control limits p_r([t,t+Delta]) and/or the locally stored internal installation-dependent control limits p_f(t).

The variation is advantageously performable by a weighted average of a set of randomly chosen representative progressions of charging/discharging current cc([t,t+Delta]) taking into account the predicted operational control parameters and/or control limits p_r([t,t+Delta]) and/or the locally stored internal installation-dependent control limits p_f(t) and assigning higher weights to those representative charging/discharging current curves with more favorable cost function values.

The long-term consideration within the second time interval ]t+Delta,L] is advantageously performable by a combination of several representative cost functions within a time interval being shorter than the second time interval.

The long-term consideration is also advantageously performable on the basis of results of the short-term consideration.

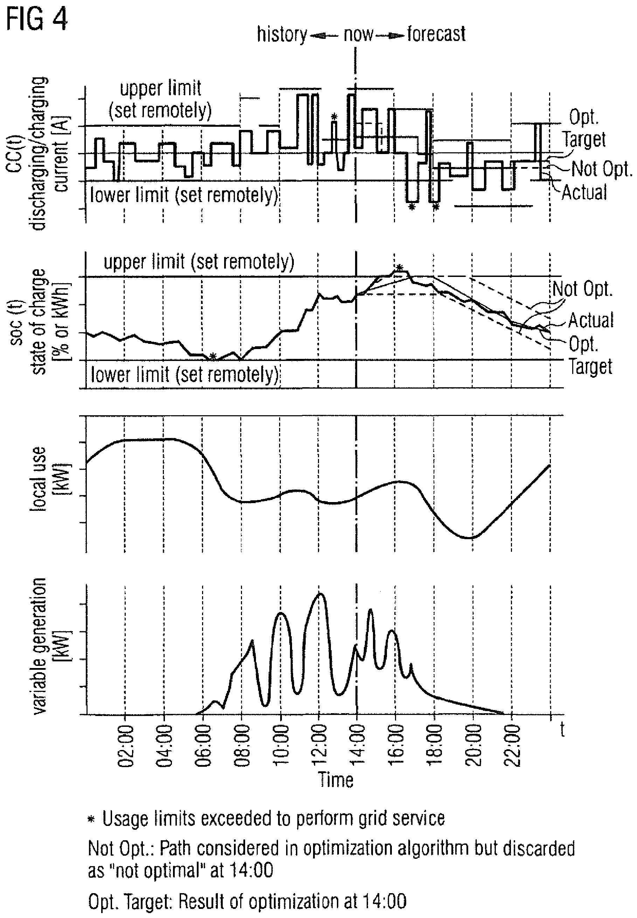

**Figure 3** shows a diagram to explain an example of feeding the results of a short-term optimization as illustrated in **Figure 4** back onto the long-term behavior of the storage respectively the battery. The curves generated by the short-term optimizer plus the history of the day so far are repeated for 10 days, with the control limits cutting the curves off where applicable by reducing the charging or discharging current to zero. A statistic is generated and scaled onto a timeframe of 10 years.

In the optimization, the following is considered better if two progressions are compared:
- higher remaining capacity and lower internal resistance of the storage system after 10 years as calculated by a model for the storage system's aging processes
- employing more energy from the variable generation for local use.

**Figure 4** shows a diagram to illustrate a simple version of the optimization of the operation of an individual storage system under control limits imposed remotely. The control limits are a maximum charging and a maximum discharging current for local usage and a maximum and minimum state of charge for local usage. These limits change over time.

In this example, at 14:00, the optimizer searches the optimal state-of-charge curve for the following ten hours. In the optimization, the following is considered better if two progressions are compared:
- drawing more power from the variable generation for local use
- keeping lower maximal charging currents
- keeping lower maximal discharging currents

The optimizer OPT has forecasts for local use and variable generation. Electrical energy supply grid services to be performed are taken into account only by staying within the control limits which are set remotely, since the necessity of grid services is assumed not to be predictable in this case. The result of the optimization is the solid curve. The dashed curves are intermediate steps in the optimization. In a Monte Carlo optimization, these curves would be assigned a significantly lower integration weight than the solid path.

In **Figure 4** the optimal progression in the short-term also generates optimal results in the long term. However it should be noted that depending on the weights of the two optimization criteria above, the optimizer could also find the dashed curve which is actually sketched for the long term to be optimal if the storage system ages much less when spending most of its life at a higher state of charge.

## Claims

1. A device for an optimized operation of a local storage system (S) in an electrical energy supply grid with distributed storages, **characterised by** a local storage control unit (SC) connected to said local storage system (S) and to an operation center (0), wherein
- local values (p_l) including the current generated by a local generator and/or the current consumed by a local load are measurable at the location of the local storage system (S) and are transmittable to the operator side (0),
- locally stored internal installation-dependent control limits (p_f) including the maximum storage capacity and the maximum charge and discharge power of said local storage system (S) are transmittable to the operator side (0),
- operational control parameters including a default value for a charging current are transmittable from the operator side (0),
- control limits (p_r) including information about minimum and/or maximum charging states for local operation and information about maximum charging and/or discharging current limits are receivable from the operator side (O) and
- a charge/discharge current (BF) of the local storage system (S) is adjusted at a given point in time on the basis of the local values (p_1), the locally stored internal installation-dependent control limits (p_f) and the operational control parameters and control limits (p_r) received from the operator side (0).

2. The device as claimed by claim 1,
wherein said local storage control unit (SC) comprises a local optimizer (OPT) and is adapted to calculate a setpoint of a charging/discharging current (BF) by search of a minimum of a cost function on the basis of the local values (p_1), the locally stored internal installation-dependent control limits (p_f) and the operational control parameters and control limits (p_r) received from the operator side (0).

3. The device as claimed in claim 1 or 2,
wherein the cost function, which is to be minimized, corresponds to a service life, which is to be maximized, of the local storage system (S) and
wherein this service life is determinable at least from usage histories (h([0,t])) of the local storage system (S) and a usage histories/storage system service life model for the local storage system (S).

4. The device as claimed in claim 3,
wherein the remaining storage capacity (cap_h(t)) is determinable from the respective usage histories (h([0,t])) and a usage histories/storage capacity model for said local storage system (S) and
wherein the service life of said local storage system (S) is attainable if at least a determined remaining storage capacity (cap_h(t)) does not fall below a certain critical storage capacity.

5. The device as claimed in claim 4,
wherein the usage history (h([0,t])) comprises accumulated previous charging profiles (c(t,(soc_i, soc_f, cc)) ),
wherein these include the number of charging processes of said local storage system (S) that have occurred from a specific initial charging state to a specific end charging state and a specific charging current (CC) after a specific operating period (t).

6. The device as claimed in claim 5,
wherein the remaining storage capacity (cap(t)) is formable in that a percentage, which is calculated, by weighted integration of the accumulated previous charging profiles ( c(t, (soc_i, soc_f, CC))), over the range of all possible triples comprising initial charging states, end charging states and charging/discharging currents, is subtracted from 100%, wherein the weighting function (w) also depends on these triples and on the storage model.

7. The device as claimed in any one of claims 3 to 6,
wherein an increase in internal resistance (r_h(t)) is determinable from the usage history (h([0,t])) and an usage history/increase in internal resistance model for said local storage system (S) and
wherein the service life of said local storage system (S) is at least when the local storage system (S) can no longer absorb and/or deliver a specific critical wattage due to the increase in internal resistance.

8. The device as claimed in any one of the preceding claims 1 to 7,
wherein the measured variables (p_l(t)) locally determined at said local storage system (S) include at least one measured value or time serie for the following variables:
voltage frequency, voltage, spectra of the voltage and therewith the voltage frequency, local state of charge, local charging/discharging current, electrical grid voltage and/or temperature at at least one location.

9. The device claimed in any one of the preceding claims 1 to 8,
wherein an optimal charging/discharging current (cc(t)) can be approximated by a combination of a detailed short-term consideration within a first time interval ([t, t+Delta]) and a long-term consideration within a following second time interval ( ]t+Delta,L] ).

10. The device as claimed in claim 9,
wherein the short-term consideration comprises a short-term prediction of expected operational control parameters and/or control limits (p_r([t,t+Delta])) and a variation of the possible charging/discharging current progressions (cc([t,t+Delta])) under the condition of the predicted operational control parameters and/or control limits ( p_r([t,t+Delta])) and the locally stored internal installation-dependent control limits (p_f(t)).

11. The device as claimed in claim 10,
wherein the variation is performable by a weighted average of a set of randomly chosen progresses of charging/discharging currents (cc([t,t+Delta])) taking into account the predicted operational control parameters and/or control limits ( p_r([t,t+Delta]) ) and the locally stored internal installation-dependent control limits (p_f(t)) and assigning higher weights to those representative progressions of charging/discharging currents with favorable cost function values.

12. The device as claimed in claim 9,
wherein the long-term consideration within the second time interval (]t+Delta,L]) is performable by a combination of several representative cost functions within a time interval being shorter than the second time interval.

13. The device as claimed in claim 9,
wherein the long-term consideration is performable on the basis of results of the short-term consideration.

## Patentansprüche

1. Vorrichtung für einen optimierten Betrieb eines lokalen Speichersystems (S) in einem Elektrizitätsversorgungsnetz mit verteilten Speichern, **gekennzeichnet durch** eine lokale Speicher-Steuereinheit (SC), die mit dem lokalen Speichersystem (S) und mit einer Betriebszentrale (O) verbunden ist, wobei
- lokale Werte (p_1), die den **durch** einen lokalen Generator generierten Strom und/oder den **durch** eine lokale Last verbrauchten Strom enthalten, an der Stelle des lokalen Speichersystems (S) messbar sind und zur Betreiberseite (0) übertragen werden können,
- lokal gespeicherte interne installationsabhängige Steuerungsgrenzen (p_f), welche die maximale Speicherkapazität und die maximale Lade- und Entladeleistung des lokalen Speichersystems (S) enthalten, zur Betreiberseite (O) übertragen werden können,
- Betriebssteuerungsparameter, die einen Standardvorgabewert für einen Ladestrom enthalten, von der Betreiberseite (O) übertragen werden können,
- Steuerungsgrenzen (p_r), die Informationen über Mindest- und/oder Maximalladezustände für einen lokalen Betrieb und Informationen über maximale Lade- und/oder Entladestromgrenzen enthalten, von der Betreiberseite (O) kommend empfangen werden können, und
- ein Lade-/Entladestrom (BF) des lokalen Speichersystems (S) an einem bestimmten Zeitpunkt auf der Basis der lokalen Werte (p_1), der lokal gespeicherten internen installationsabhängigen Steuerungsgrenzen (p_f) und der Betriebssteuerungsparameter und Steuerungsgrenzen (p_r), die von der Betreiberseite (0) kommend empfangen werden, eingestellt wird.

2. Vorrichtung nach Anspruch 1,
wobei die lokale Speicher-Steuereinheit (SC) einen lokalen Optimierer (OPT) umfasst und dafür ausgelegt ist, einen Sollwert eines Lade-/Entladestroms (BF) durch die Suche nach einem Minimum einer Kostenfunktion auf der Basis des lokalen Wertes (p_l), der lokal gespeicherten internen installationsabhängigen Steuerungsgrenzen (p_f) und der Betriebssteuerungsparameter und Steuerungsgrenzen (p_r), die von der Betreiberseite (O) kommend empfangen werden, zu berechnen.

3. Vorrichtung nach Anspruch 1 oder 2,
wobei die Kostenfunktion, die zu minimieren ist, einer Grenznutzungsdauer, die zu maximieren ist, des lokalen Speichersystems (S) entspricht, und
wobei diese Grenznutzungsdauer mindestens anhand eines Verbrauchsverlaufs (h([0,t])) des lokalen Speichersystems (S) und eines Verbrauchsverlauf-/Speichersystem-Grenznutzungsdauer-Modells für das lokale Speichersystem (S) bestimmt werden kann.

4. Vorrichtung nach Anspruch 3,
wobei die verbleibende Speicherkapazität (cap_h(t)) anhand der jeweiligen Verbrauchsverläufe (h([0,t])) und eines Verbrauchsverlauf-/Speichersystem-Grenznutzungsdauer-Modells für das lokale Speichersystem (S) bestimmt werden kann, und
wobei die Grenznutzungsdauer des lokalen Speichersystems (S) erhalten werden kann, wenn mindestens eine bestimmte verbleibende Speicherkapazität (cap_h(t)) nicht unter eine bestimmte kritische Speicherkapazität sinkt.

5. Vorrichtung nach Anspruch 4,
wobei die Verbrauchsverläufe (h([0,t])) akkumulierte frühere Ladeprofile (c(t, (sac_i, soc_f, CC))) umfassen, wobei diese die Anzahl der Ladeprozesse des lokalen Speichersystems (S), die ab einem spezifischen anfänglichen Ladezustand bis zu einem spezifischen End-Ladezustand stattgefunden haben, und einen spezifischen Ladestrom (CC) nach einem spezifischen Betriebszeitraum (t) enthalten.

6. Vorrichtung nach Anspruch 5,
wobei die verbleibende Speicherkapazität (cap(t)) dadurch gebildet werden kann, dass ein Prozentsatz, der berechnet wird durch eine gewichtete Integration der akkumulierten früheren Ladeprofile (c(t, (soc-ᵢ, soc_f, CC))) über den Bereich aller möglichen Tripel, die Anfangs-Ladezustände, End-Ladezustände und Lade-/Entladeströme umfassen, von 100 % abgezogen wird, wobei die Gewichtungsfunktion (w) auch von diesen Tripeln und von dem Speichermodel abhängig ist.

7. Vorrichtung nach einem der Ansprüche 3 bis 6,
wobei ein Anstieg des inneren Widerstands (r_h(t)) anhand der Verbrauchsverläufe (h([0,t))) und eines Verbrauchsverlauf-/Anstieg-des-inneren-Widerstands-Modells für das lokale Speichersystem (S) bestimmt werden kann, und
wobei die Grenznutzungsdauer des lokalen Speichersystems (S) mindestens dann erreicht ist, wenn das lokale Speichersystem (S) aufgrund des Anstiegs des inneren Widerstands nicht länger eine spezifische kritische Wattzahl aufnehmen und/oder liefern kann.

8. Vorrichtung nach einem der vorangehenden Ansprüche 1 bis 7,
wobei die gemessenen Variablen (p_1(t)), die lokal in dem lokalen Speichersystem (S) bestimmt werden, mindestens eine gemessene Wert- oder Zeitreihe für die folgenden variablen enthalten:
Spannungsfrequenz, Spannung, Spektren der Spannung und damit die Spannungsfrequenz, lokaler Ladungszustand, lokaler Lade-/Entladestrom, Elektrizitätsnetzspannung und/oder Temperatur an mindestens einer Stelle.

9. Vorrichtung nach einem der vorangehenden Ansprüche 1 bis 8,
wobei ein optimaler Lade-/Entladestrom (cc(t)) durch eine Kombination einer detaillierten kurzfristigen Betrachtung innerhalb eines ersten Zeitintervalls ([t,t+Delta]) und einer langfristigen Betrachtung innerhalb eines folgenden zweiten Zeitintervalls (]t+Delta,L]) angenähert werden kann.

10. Vorrichtung nach Anspruch 9,
wobei die kurzfristige Betrachtung eine kurzfristige Vorhersage erwarteter Betriebssteuerungsparameter und/oder Steuerungsgrenzen (p_r([t,t+Delta])) und eine Veränderung der möglichen Lade-/Entladestromfortschritte (cc([t,t+Delta])) unter der Bedingung der vorhergesagten Betriebssteuerungsparameter und/oder Steuerungsgrenzen p-r([t,t+Delta])) und der lokal gespeicherten internen installationsabhängigen Steuerungsgrenzen (p_f(t)) umfasst.

11. Vorrichtung nach Anspruch 10,
wobei die Veränderung durch einen gewichteten Durchschnitt eines Satzes zufällig ausgewählter Fortschritte von Lade-/Entladeströmen (cc([t,t+Delta])) unter Berücksichtigung der vorhergesagten Betriebssteuerungsparameter und/oder Steuerungsgrenzen p r([t,t+Delta])) und der lokal gespeicherten internen installationsabhängigen Steuerungsgrenzen (p_f(t)) und Zuweisen höherer Gewichte zu jenen repräsentativen Fortschritten von Lade-/Entladeströmen mit günstigen Kostenfunktionswerten ausgeführt werden kann.

12. Vorrichtung nach Anspruch 9,
wobei die langfristige Betrachtung innerhalb des zweiten Zeitintervalls (]t+Delta,L]) durch eine Kombination mehrerer repräsentativer Kostenfunktionen innerhalb eines Zeitintervalls, das kürzer als das zweite Zeitintervall ist, ausgeführt werden kann.

13. Vorrichtung nach Anspruch 9,
wobei die langfristige Betrachtung auf der Basis von Ergebnissen der kurzfristigen Betrachtung ausgeführt werden kann.

## Revendications

1. Dispositif destiné à un fonctionnement optimisé de système de stockage local (S) dans un réseau d'alimentation en énergie électrique doté de stockages distribués, **caractérisé par** une unité de commande de stockage local (SC) connectée audit système de stockage local (S) et à un centre des opérations (0), dans lequel :
- des valeurs locales (p_1) incluant le courant produit par un générateur local et/ou le courant consommé par une charge locale peuvent être mesurées à l'emplacement du système de stockage local (S) et peuvent être transmises au côté opérateur (0),
- des limites de commande en fonction de l'installation interne stockées localement (p_f) incluant la capacité de stockage maximum et la charge maximum ainsi que la puissance de décharge dudit système de stockage local (S) peuvent être transmises au côté opérateur (O),
- des paramètres de contrôle opérationnel incluant une valeur par défaut de courant de charge peuvent être transmis depuis le côté opérateur (O),
- des limites de commande (p_r) incluant des informations sur des états de charge minimum et/ou maximum pour un fonctionnement local et des informations sur des limites de courant de charge et/ou de décharge maximum peuvent être reçues en provenance du côté opérateur (O), et
- un courant de charge/décharge (BF) du système de stockage local (S) est ajusté à un instant donné, sur la base des valeurs locales (p_l), des limites de commande en fonction de l'installation interne stockées localement (p_f) ainsi que des paramètres de contrôle opérationnel et des limites de commande (p_r) reçus en provenance du côté opérateur (O).

2. Dispositif selon la revendication 1,
dans lequel ladite unité de commande de stockage local (SC) comprend un optimiseur local (OPT) et est conçue pour calculer une valeur de consigne de courant de charge/décharge (BF) par recherche d'un minimum de fonction de coût, sur la base des valeurs locales (p_1), des limites de commande en fonction de l'installation interne stockées localement (p_f) ainsi que des paramètres de contrôle opérationnel et des limites de commande (p_r) reçus en provenance du côté opérateur (O).

3. Dispositif selon la revendication 1 ou 2,
dans lequel la fonction de coût qui doit être minimisée, correspond à une durée de vie, qui doit être maximisée, du système de stockage local (S), et
dans lequel cette durée de vie peut être déterminée au moins d'après des historiques d'utilisation (h([0,t])) du système de stockage local (S) et un modèle d'historiques d'utilisation/de durée de vie de système de stockage du système de stockage local (S).

4. Dispositif selon la revendication 3,
dans lequel la capacité de stockage restante (cap_h(t)) peut être déterminée d'après les historiques d'utilisation respectifs (h([0,t])) et un modèle d'historiques d'utilisation/de capacité de stockage dudit système de stockage local (S), et
dans lequel la durée de vie dudit système de stockage local (S) peut être atteinte si au moins une capacité de stockage restante déterminée (cap_h(t)) ne chute pas au-dessous d'une certaine capacité de stockage critique.

5. Dispositif selon la revendication 4,
dans lequel l'historique d'utilisation (h([0,t])) comprend des profils de charge précédents accumulés (c(t, (soc_i, soc_f, CC))), dans lequel ceux-ci incluent le nombre de processus de charge dudit système de stockage local (S) qui se sont déroulés d'un état de charge initial spécifique à un état de charge final spécifique et un courant de charge spécifique (CC) après une période de fonctionnement spécifique (t).

6. Dispositif selon la revendication 5,
dans lequel la capacité de charge restante (cap(t)) peut être formée, dans la mesure où un pourcentage qui est calculé par intégration pondérée des profils charge précédents accumulés (c(t, (soc_i, soc_f, CC))) sur le domaine de tous les triplets possibles comprenant des états de charge initiaux, des états de charge finaux et des courants de charge/décharge, est soustrait de 100 %, dans lequel la fonction de pondération (w) est également fonction de ces triplets et du modèle de stockage.

7. Dispositif selon l'une quelconque des revendications 3 à 6,
dans lequel une élévation de résistance interne (r_h(t)) peut être déterminée d'après l'historique d'utilisation (h([0,t])) et un modèle d'historique d'utilisation/élévation de résistance interne dudit système de stockage local (S), et
dans lequel la durée de vie dudit système de stockage local (S) est au moins le moment où le système de stockage local (S) ne peut plus absorber et/ou délivrer une puissance critique spécifique, du fait de l'élévation de résistance interne.

8. Dispositif selon l'une quelconque des revendications 1 à 7 précédentes,
dans lequel les variables mesurées (p_1(t)) déterminées localement au niveau dudit système de stockage local (S) incluent au moins une valeur mesurée ou une série temporelle des variables suivantes :
fréquence de tension, tension, spectres de la tension et également la fréquence de tension, l'état de charge local, le courant de charge/décharge local, la tension et/ou la température de réseau électrique à au moins un emplacement.

9. Dispositif selon l'une quelconque des revendications 1 à 8 précédentes,
dans lequel un courant de charge/décharge optimal (cc(t)) peut être approximé par combinaison d'un examen détaillé à court terme à l'intérieur d'un premier intervalle de temps ([t,t+Delta]) et d'un examen à long terme à l'intérieur d'un second intervalle de temps suivant (]t+Delta, L]).

10. Dispositif selon la revendication 9,
dans lequel l'examen à court terme comprend une prédiction à court terme de paramètres de contrôle opérationnel et/ou de limites de commande (p_r([t,t+Delta])) prévus et une variation des progressions possibles de courant de charge/décharge (cc,([t,t+Delta])) sous la condition des paramètres de contrôle opérationnel et/ou des limites de commande (p_r([t,t+Delta])) prédits et des limites de commande en fonction de l'installation interne stockées localement (p_f(t)).

11. Dispositif selon la revendication 10,
dans lequel la variation peut être réalisée à l'aide d'une moyenne pondérée d'un ensemble de progressions choisies de façon aléatoire de courants de charge/décharge (cc([t,t+Delta])) en prenant en compte les paramètres de contrôle opérationnel et/ou les limites de commande (p_r([t,t+Delta])) prédits ainsi que les limites de commande en fonction de l'installation interne stockées localement (p_f(t)) et en attribuant des poids plus élevés aux progressions représentatives de courants de charge/décharge ayant des valeurs de fonction de coût favorables.

12. Dispositif selon la revendication 9,
dans lequel l'examen à long terme à l'intérieur du second intervalle de temps (]t+Delta, L]) peut être effectué par combinaison de plusieurs fonctions de coût représentatives à l'intérieur d'un intervalle de temps qui est plus court que le second intervalle de temps.

13. Dispositif selon la revendication 9,
dans lequel l'examen à long terme peut être effectué sur la base de résultats de l'examen à court terme.
